# EUROPÄISCHE PATENTSCHRIFT

(11) **EP 2 118 572 B1**
(45) Veröffentlichungstag und Bekanntmachung des Hinweises auf die Patenterteilung: **27.12.2017**
(21) Anmeldenummer: 08707389.6
(22) Anmeldetag: 30.01.2008
(51) Int. Cl.: F24D 15/04, F24J 3/00, F28C 3/06, F28D 21/00

(54) **VERFAHREN UND EINRICHTUNG ZUR WÄRMERÜCKGEWINNUNG**
METHOD AND DEVICE FOR HEAT RECOVERY
PROCÉDÉ ET DISPOSITIF DE RÉCUPÉRATION DE CHALEUR

(30) Priorität: 05.02.2007 DE 102007006419
(43) Veröffentlichungstag der Anmeldung: 18.11.2009
(73) Patentinhaber: Müller, Siegfried, 88416 Steinhausen/Rottum (DE)
(72) Erfinder: Müller, Siegfried, 88416 Steinhausen/Rottum (DE)
(74) Vertreter: Schumacher, Bernd
(86) Internationale Anmeldenummer: PCT/EP2008/000688
(87) Internationale Veröffentlichungsnummer: WO 2008/095628

(56) Entgegenhaltungen:
- DE-A1- 3 139 564
- DE-A1-102005 059 942
- DE-U1-202004 018 084
- GB-A- 2 402 204
- US-A- 4 184 856

## Beschreibung

Die Erfindung betrifft ein Verfahren zur Wärmerückgewinnung aus einem umschlossenen flüssigkeitsdurchströmten Kanal, wobei über der Flüssigkeit befindliches und an diese sowie an die Kanalwandung in direktem Wärmeaustauschkontakt angrenzendes, im Gegenstrom zum Flüssigkeitsstrom strömendes Gas, wie Luft, aus dem Kanal abgesaugt, einer Wärmerückgewinnung unterworfen und dann abgelassen wird, und eine Einrichtung zum Durchführen dieses Verfahrens.

Ein solches Verfahren - sowie eine hierfür dienende Einrichtung - zur Wärmerückgewinnung ist aus der US- A - 4184856 bekannt. Hierbei besteht der große Nachteil, dass das infolge der Wärmerückgewinnung abgekühlte Gas aus dem Kanal ungenutzt nach außen abgelassen wird.

Der vorliegenden Erfindung liegt die Aufgabe zugrunde, ein geeignetes Verfahren und eine zum Durchführen desselben geeignete Einrichtung zu schaffen, womit es möglich ist, ein ungenutztes Ablassen des durch die Wärmerückgewinnung abgekühlten Gases aus dem Kanal nach außen zu vermeiden.

Zur Lösung der gestellten Aufgabe wird bei einem Verfahren der genannten Art erfindungsgemäß vorgeschlagen, dass das Gas nach erfolgter Wärmerückgewinnung an einer relativ zur Absaugstelle in bezug auf die Strömungsrichtung der Flüssigkeit stromaufwärts gelegenen Stelle in den Kanal zurückgeleitet wird.

Hierdurch kann in einfacher Weise vermieden werden, dass das durch die Wärerückgewinnung abgekühlte Gas aus dem Kanal ungenutzt nach außen abgelassen wird. Hierdurch entfällt auch die Notwendigkeit, zur Vermeidung oder Reduzierung von Umweltbelastungen durch schädliche oder störende Gasbestandteile das Gas vor dem Ablassen zu reinigen, wie zu filtern. Durch das stromaufwärts von der Absaugstelle erfolgende Zurückleiten des abgekühlten Gases in den Kanal wird vermieden, dass an der Absaugstelle ein ungewolltes Vermischen des Gases im Kanal mit durch die Wärmerückgewinnung abgekühltem rezirkuliertem Gas erfolgt.

Eine zum Durchführen dieses Verfahrens dienende Einrichtung, bei der ein mit einem gasführenden Kanalbereich über der Flüssigkeit in Verbindung stehender absaugender erster Kanalanschluss mit einem Gaseingang eines Wärmerückgewinnungsaggregats verbunden ist, zeichnet sich erfindungsgemäß dadurch aus, dass der Gasausgang des Wärmerückgewinnungsaggregats mit einem zurückleitenden zweiten Kanalanschluss verbunden ist, der in bezug auf die Strömungsrichtung der Flüssigkeit stromauf vom ersten Kanalanschluss angeordnet ist. Dabei ist das Wärmerückgewinnungsaggregat vorzugsweise als Wärmepumpe ausgebildet.

Eine solche Einrichtung ist besonders einfach sowie preiswert herstellbar und installierbar. Sie ermöglicht eine effiziente Ausnutzung der Wärmeenergie in dem von der Kanalflüssigkeit und von dem den Kanal umgebenden Erdreich erwärmten Gas, und zwar ohne störenden Einfluss von bei der Wärmerückgewinnung abgekühltem rezirkuliertem Gas.

Die Erfindung wird nachfolgend an einem in einer Figur dargestellten Ausführungsbeispiel näher erläutert.

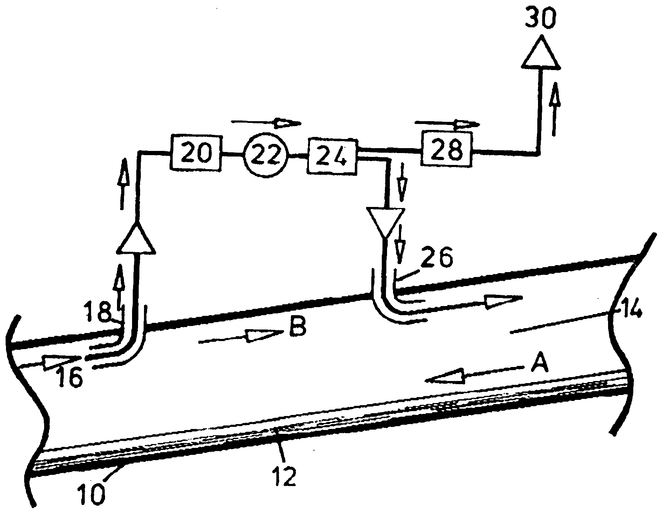

Gemäß der Zeichnung befindet sich in einem zumindest leicht geneigten umschlossenen Kanal 10, wie einem Abwasserkanal, oder einem entsprechenden Kanalbekken eine im vorliegenden Fall neigungsbedingt in Pfeilrichtung A strömende erwärmte Flüssigkeit 12, wie Abwasser. In dem Kanal 10 befindet sich über der Flüssigkeit 12 ein Gas 14, wie Luft, das durch natürlichen Wärmeaustausch über die Grenzschicht zur Flüssigkeit von dieser und über die Grenzschicht zur Kanalwandung von dem den Kanal 10 umgebenden Erdreich erwärmt wird. Dieses Gas 14 strömt normalerweise auf natürlichem Wege entgegen der Fließrichtung A der Kanalflüssigkeit 12 in Pfeilrichtung B.

An einem Absaugbereich 16, der beispielsweise als ein in den Kanal 10 eintauchender Kanalanschluß 18 ausgebildet ist, wird das erwärmte Gas abgesaugt und einem Wärmerückgewinnungsaggregat 20 zugeführt. Dieses kann als Wärmepumpe oder bei höherem Wärmeniveau gegebenenfalls auch als einfacher Wärmeaustauscher ausgebildet sein. Im vorliegenden Beispiel ist dem Wärmerückgewinnungsaggregat 20 eine Gaspumpe 22 nachgeschaltet, die für ein definiertes hochwirksames Absaugen des Gases 14 aus dem Kanal 10 und für ein Hindurchleiten durch das Wärmerückgewinnungsaggregat 20 sorgt.

Bei der dargestellten Einrichtung ist der Gaspumpe 22 eine Weiche 24 zum Umschalten des nach dem Wärmeentzug abgekühlten Gases 14 nachgeschaltet. Die Weiche 24 ermöglicht es, dass das Gas 14 normalerweise über einen zweiten Kanalanschluß 26 in Bezug auf die Strömungsrichtung A der Flüssigkeit 12 stromauf vom ersten Kanalanschluß 18 wieder in den Kanal 10 zurückgeführt oder über ein gas- bzw. luftreinigendes Filterelement 28 an die Umgebung 30 abgelassen wird.

Bei dem dargestellten Ausführungsbeispiel mündet der erste Kanalanschluß 18 in Strömungsrichtung A der Flüssigkeit 12 bzw. entgegen der Strömungsrichtung B des Gases 14. Hierdurch kann das Gas 14 im wesentlichen verwirbelungsfrei und widerstandsarm angesaugt werden. Der erste Kanalanschluß 18 mündet im vorliegenden Fall nahe dem oberen, nämlich flüssigkeitsfernen, Kanalbereich, in dem sich die aus der Flüssigkeit aufsteigende Wärmeenergie, ferner die über die Kanalwandung in den Kanal 10 gelangende Erdwärmeenergie und die dem Gas latent innewohnende Wärmeenergie sammeln. Grundsätzlich wäre es aber auch möglich, den ersten Kanalanschluß 18 flüssigkeitsnah anzuordnen oder sogar zu splitten, damit gleichzeitig ein oberflächennahes und ein oberflächenfernes Absaugen erfolgen.

Gemäß der beispielhaften Darstellung mündet der zweite Kanalanschluß 26 im vorliegenden Fall in Strömungsrichtung B des Gases 14 bzw. entgegen der Strömungsrichtung A der Flüssigkeit 12. Dadurch kann das abgekühlte Gas im wesentlichen verwirbelungsfrei und widerstandsarm in den Kanal rezirkuliert werden.

Die dargestellte Einrichtung ist anlagentechnisch vielfältig abwandelbar. Wichtig ist dabei stets, dass von der Flüssigkeit, wie Abwasser, und/oder von dem den Kanal umgebenden Erdreich erwärmtes Gas, wie Luft, aus einem geschlossenen Kanal bzw. Kanalbecken abgesaugt, einer das Gas abkühlenden Wärmerückgewinnung unterworfen und dann stromauf von der Absaugstelle wieder in den Kanal bzw. das Kanalbecken zurückgeleitet wird.

Die Erfindung wird nachfolgend an einem in einer Figur dargestellten Ausführungsbeispiel näher erläutert.

Gemäß der Zeichnung befindet sich in einem zumindest leicht geneigten umschlossenen Kanal 10, wie einem Abwasserkanal, oder einem entsprechenden Kanalbekken eine im vorliegenden Fall neigungsbedingt in Pfeilrichtung A strömende erwärmte Flüssigkeit 12, wie Abwasser. In dem Kanal 10 befindet sich über der Flüssigkeit 12 ein Gas 14, wie Luft, das durch natürlichen Wärmeaustausch über die Grenzschicht zur Flüssigkeit von dieser und über die Grenzschicht zur Kanalwandung von dem den Kanal 10 umgebenden Erdreich erwärmt wird. Dieses Gas 14 strömt normalerweise auf natürlichem Wege entgegen der Fließrichtung A der Kanalflüssigkeit 12 in Pfeilrichtung B.

An einem Absaugbereich 16, der beispielsweise als ein in den Kanal 10 eintauchender Kanalanschluß 18 ausgebildet ist, wird das erwärmte Gas abgesaugt und einem Wärmerückgewinnungsaggregat 20 zugeführt. Dieses kann als Wärmepumpe oder bei höherem Wärmeniveau gegebenenfalls auch als einfacher Wärmeaustauscher ausgebildet sein. Im vorliegenden Beispiel ist dem Wärmerückgewinnungsaggregat 20 eine Gaspumpe 22 nachgeschaltet, die für ein definiertes hochwirksames Absaugen des Gases 14 aus dem Kanal 10 und für ein Hindurchleiten durch das Wärmerückgewinnungsaggregat 20 sorgt.

Bei der dargestellten Einrichtung ist der Gaspumpe 22 eine Weiche 24 zum Umschalten des nach dem Wärmeentzug abgekühlten Gases 14 nachgeschaltet. Die Weiche 24 ermöglicht es, daß das Gas 14 entweder über einen zweiten Kanalanschluß 26 in Bezug auf die Strömungsrichtung A der Flüssigkeit 12 stromauf vom ersten Kanalanschluß 18 wieder in den Kanal 10 zurückgeführt oder über ein gas- bzw. luftreinigendes Filterelement 28 an die Umgebung 30 abgelassen wird.

Bei dem dargestellten Ausführungsbeispiel mündet der erste Kanalanschluß 18 in Strömungsrichtung A der Flüssigkeit 12 bzw. entgegen der Strömungsrichtung B des Gases 14. Hierdurch kann das Gas 14 im wesentlichen verwirbelungsfrei und widerstandsarm angesaugt werden. Der erste Kanalanschluß 18 mündet im vorliegenden Fall nahe dem oberen, nämlich flüssigkeitsfernen, Kanalbereich, in dem sich die aus der Flüssigkeit aufsteigende Wärmeenergie, ferner die über die Kanalwandung in den Kanal 10 gelangende Erdwärmeenergie und die dem Gas latent innewohnende Wärmeenergie sammeln. Grundsätzlich wäre es aber auch möglich, den ersten Kanalanschluß 18 flüssigkeitsnah anzuordnen oder sogar zu splitten, damit gleichzeitig ein oberflächennahes und ein oberflächenfernes Absaugen erfolgen.

Gemäß der beispielhaften Darstellung mündet der zweite Kanalanschluß 26 im vorliegenden Fall in Strömungsrichtung B des Gases 14 bzw. entgegen der Strömungsrichtung A der Flüssigkeit 12. Dadurch kann das abgekühlte Gas im wesentlichen verwirbelungsfrei und widerstandsarm rezirkuliert werden.

Die dargestellte Einrichtung ist anlagentechnisch vielfältig abwandelbar. Wichtig ist dabei stets, daß von der Flüssigkeit, wie Abwasser, und/oder von dem den Kanal umgebenden Erdreich erwärmtes Gas, wie Luft, aus einem geschlossenen Kanal bzw. Kanalbecken abgesaugt und einer das Gas abkühlenden Wärmerückgewinnung unterworfen wird.

## Patentansprüche

1. Verfahren zur Wärmerückgewinnung aus einem umschlossenen flüssigkeitsdurchströmten Kanal, wie einem Abwasserkanal oder Kanalbecken, wobei über der Flüssigkeit befindliches und an diese sowie an die Kanalwandung in direktem Wärmeaustauschkontakt angrenzendes, im Gegenstrom zum Flüssigkeitsstrom strömendes Gas, wie Luft, aus dem Kanal abgesaugt, einer Wärmerückgewinnung unterworfen und dann abgelassen wird,
**dadurch gekennzeichnet,**
**dass** das Gas nach erfolgter Wärmerückgewinnung an einer relativ zur Absaugstelle in bezug auf die Strömungsrichtung der Flüssigkeit stromaufwärts gelegenen Stelle in den Kanal zurückgeleitet wird.

2. Einrichtung zum Durchführen des Verfahrens nach Anspruch 1, wobei ein mit einem gasführenden Kanalbereich (16) über der Flüssigkeit (12) in Verbindung stehender absaugender erster Kanalanschluss (18) mit einem Gaseingang eines Wärmerückgewinnungsaggregats (20) verbunden ist,
**dadurch gekennzeichnet,**
**dass** der Gasausgang des Wärrnerückgewinnungsaggregats (20) mit einem zurückleitenden zweiten Kanalanschluss (26) verbunden ist, der in bezug auf die Strömungsrichtung der Flüssigkeit (12) stromauf vom ersten Kanalanschluss (18) angeordnet ist.

3. Einrichtung nach Anspruch 2, **dadurch gekennzeichnet, dass** das Wärmerückgewinnungsaggregat (20) als Wärmepumpe ausgebildet ist.

## Claims

1. Method for heat recovery from an enclosed channel through which fluid flows, such as a sewer or a channel basin, wherein gas, such as air, which flows in countercurrent of the fluid flow and which is located over the fluid and adjacent to both the fluid and the channel wall, is suctioned from the channel, subjected to a heat recovery and then released,
**characterized in that**
after completion of the heat recovery, the gas is redirected in the channel at a location situated upstream of the suction location in respect to the flow direction of the fluid.

2. Device for carrying out the method of claim 1, wherein a first channel connection (18) in communication with a channel zone (16) guiding gas above fluid (12) is connected to a gas inlet of a heat recovery unit (20),
**characterized in that**
the gas outlet of the heat recovery unit (20) is connected to a returning second channel connection (26) which is arranged upstream of the first channel connection (18) in respect to the flow direction of the fluid (12).

3. Device according to claim 2, **characterized in that** the heat recovery unit (20) is designed as heat pump.

## Revendications

1. Procédé pour la récupération de chaleur d'un canal enveloppé traversé par du fluide, tel qu'un canal d'eaux usées ou un bassin à canal, dans lequel du gaz, tel que de l'air, s'écoulant à contre-courant du courant du fluide et se trouvant au-dessus du fluide et au voisinage à la fois de celui-ci et de la paroi du canal, est aspiré du canal, soumis à une récupération de chaleur, puis relâché,
**caractérisé en ce que**
après achèvement de la récupération de chaleur, le gaz est redirigé dans le canal à un endroit situé en amont de l'endroit d'aspiration par rapport à la direction d'écoulement du fluide.

2. Dispositif pour mettre en oeuvre le procédé selon la revendication 1. dans lequel un premier raccord de canal (18) en communication avec une zone de canal (16) guidant du gaz au-dessus du fluide (12) est relié à une entrée de gaz d'une unité de récupération de chaleur (20),
**caractérisé en ce que**
la sortie de gaz de l'unité de récupération de chaleur (20) est reliée à un deuxième raccord de canal (26) de retour qui est agencé en amont du premier raccord de canal (18) par rapport à la direction d'écoulement du fluide (12).

3. Dispositif selon la revendication 2, **caractérisé en ce que** l'unité de récupération de chaleur (20) est réalisée en tant que pompe à chaleur.
